(19) Europäisches Patentamt / European Patent Office / Office européen des brevets

(11) **EP 2 105 199 B1**

(12) **EUROPEAN PATENT SPECIFICATION**

(45) Date of publication and mention
of the grant of the patent:
**07.11.2018 Bulletin 2018/45**

(21) Application number: **09250713.6**

(22) Date of filing: **13.03.2009**

(51) Int Cl.:
*B01D 53/94* (2006.01)    *F01N 3/022* (2006.01)
*F01N 3/035* (2006.01)    *B01J 37/02* (2006.01)
*B01J 23/656* (2006.01)   *B01J 35/10* (2006.01)
*B01J 37/34* (2006.01)    *B01J 27/224* (2006.01)
*B01J 35/02* (2006.01)    *B01J 35/04* (2006.01)
*B01J 37/00* (2006.01)

(54) **CATALYST-CARRYING FILTER**

KATALYSATOR BESCHICHTETER FILTER

FILTRE REVÊTU AVEC UN CATALYSEUR

(84) Designated Contracting States:
**DE FR**

(30) Priority: **25.03.2008 JP 2008078473**

(43) Date of publication of application:
**30.09.2009 Bulletin 2009/40**

(73) Proprietor: **NGK Insulators, Ltd.**
**Nagoya-city, Aichi 467-8530 (JP)**

(72) Inventor: **Mizutani, Takashi**
**Nagoya City**
**Aichi-ken 467-8530 (JP)**

(74) Representative: **Naylor, Matthew John et al**
**Mewburn Ellis LLP**
**City Tower**
**40 Basinghall Street**
**London EC2V 5DE (GB)**

(56) References cited:
**EP-A- 1 992 394          WO-A-2005/014146**
**WO-A-2005/084806     DE-A1-102004 040 548**
**JP-A- 2002 309 921      JP-A- 2003 210 922**
**US-A1- 2004 191 133**

**Description**

Background of the Invention and Related Art Statement

The present invention relates to a catalyst-carrying filter that is used to trap or purify particulate matter contained in exhaust gas discharged from an internal combustion engine (e.g., diesel engine) or a combustion apparatus.

Exhaust gas discharged from an internal combustion engine (e.g., diesel engine) or a combustion apparatus (hereinafter may be collectively referred to as "internal combustion engine or the like") contains a large amount of particulate matter (hereinafter may be referred to as "PM") that mainly contains soot (graphite). When particulate matter is directly discharged to the atmosphere, environmental pollution occurs. Therefore, a filter that traps particulate matter is generally provided in an exhaust gas passage connected to an internal combustion engine or the like.

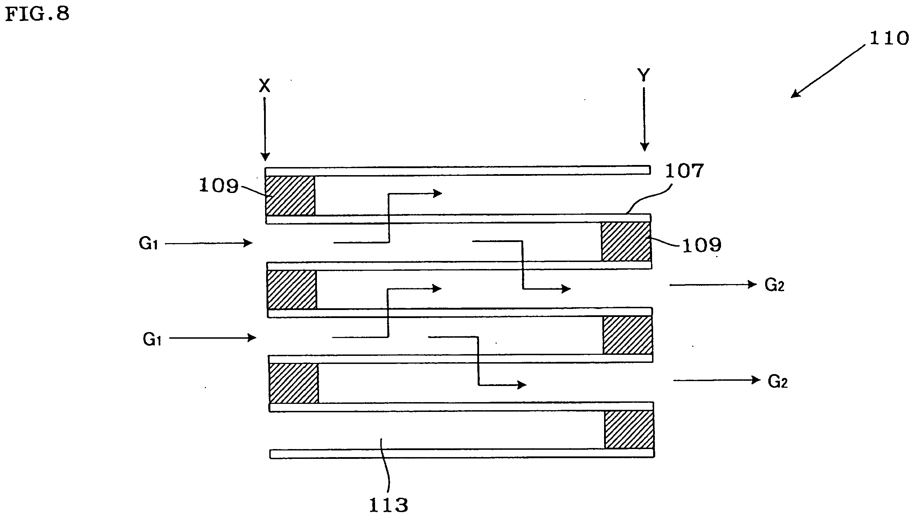

For example, a honeycomb filter 110 shown in FIG. 8 is used for such a purpose. The honeycomb filter 110 includes a honeycomb structure that has a plurality of cells 113 (exhaust gas passages) partitioned by a partition wall 107 formed of a porous ceramic having a number of pores, one open end X and the other open end Y of the cells 113 being alternately plugged by plugging portions 109. In recent years, a honeycomb filter that carries an oxidizing catalyst for promoting oxidation (combustion) of particulate matter (hereinafter may be referred to as "catalyst-carrying filter") has been used. According to such a catalyst-carrying filter, since particulate matter contained in exhaust gas is trapped by the partition wall and oxidation (combustion) of particulate matter is promoted, the amount of particulate matter contained in exhaust gas can be reduced. Therefore, exhaust gas (exhaust gas $G_1$) that has entered the catalyst-carrying filter through one open end X can effectively be purified and discharged through the other end Y as exhaust gas $G_2$.

An exhaust gas purification device wherein the average pore size of the pores formed in the partition wall is larger on the exhaust-gas-inflow side than the purified-gas-outflow side has been proposed as such a catalyst-carrying filter (see JP-A-2002-309921).

According to this exhaust gas purification device, since the average pore size of the pores formed in the partition wall is large on the exhaust-gas-inflow side, particulate matter contained in exhaust gas easily enters the partition wall through the exhaust-gas-inflow-side surface of the partition wall and reaches the inside of the pores formed in the partition wall. Moreover, since the average pore size of the pores formed in the partition wall is small on the purified-gas-outflow side, particulate matter does not flow out to the purified-gas-outflow-side cells. Therefore, particulate matter contained in exhaust gas can be efficiently trapped. Moreover, since the contact of particulate matter efficiently with an oxidizing catalyst supported inside the pores formed in the partition wall improves, oxidation (combustion) of particulate matter can sufficiently be promoted.

The above exhaust gas purification device is configured on the assumption that the pores are formed in the partition wall as a barrel space in which the pore size gradually decreases from the center in the thickness direction of the partition wall toward each side of the partition wall. In JP-A-2002-309921, one side surface of the partition wall is removed by a surface modifier so that the average pore size of the pores formed in the partition wall is larger on the exhaust-gas-inflow side than the purified-gas-outflow side. That is, the pore size of the pore is changed so that the pore size of one opening is larger than that of the other opening.

According to such a catalyst-carrying filter, when forming a trapping layer that has a small average pore size so as to trap particulate matter contained in exhaust gas in the outflow-side layer of the partition wall (i.e., the exhaust-gas-outflow-side and nearby partition wall), a catalyst supported on the surface of the trapping layer tends to deteriorate due to heat generated during PM regeneration so that the gas purification performance may decrease. That is, most of the particulate matter contained in exhaust gas is deposited on the trapping layer so that a deterioration in catalyst occurs due to a rapid increase in temperature due to combustion of particulate matter during regeneration. Therefore, the particulate matter oxidation (combustion) efficiency decreases due to repeated regeneration. As a result, particulate matter is deposited on the surface of the trapping layer within a relatively short time. Therefore, the filter must frequently be regenerated (i.e., a process that removes deposited particulate matter by back washing, heating, or the like).

Soot discharged from an engine reaches a DPF in a different manner and varies in particle diameter depending on whether the DPF is installed directly under the engine or not. However, since a known catalyst-carrying filter processes soot uniformly, the catalyst purification function cannot fully be achieved.

JP-T-2002-519186 and JP-A-2007-130637 disclose measures aimed at solving the above-described problems.

JP-T-2002-519186 discloses a method that increases the soot combustion rate by increasing the pore size of an upstream soot deposition layer so that soot is deposited in the pores and efficiently comes in contact with a catalyst. However, when the catalyst is also applied to a downstream trapping layer, the average pore size of the trapping layer is reduced in the downstream so that the pores tend to be clogged by the catalyst. Moreover, the pressure loss due to soot deposition increases. Since a large amount of catalyst cannot be applied to the entire DPF in order to prevent clogging due to the catalyst, the soot combustion rate in the upstream soot deposition layer is insufficient. Since the catalyst is uniformly applied to the entire partition wall, the regeneration temperature decreases to a large extent due to the frequent contact between PM and the catalyst. As a result, carbon is removed in an incomplete combustion state so that generation of CO cannot be suppressed.

JP-A-2007-130637 discloses a gas purification catalyst filter formed by applying a NOx removal catalyst to a wall-flow type filter (DPF) that burns and removes particulate matter inside the pores formed in the partition wall. However, in the gas purification filter, since the NOx removal catalyst has low heat resistance, the catalytic performance of the NOx removal catalyst deteriorates due to heat generated during combustion of deposited soot when the NOx removal catalyst is supported on the wall-flow type filter (DPF). As a result, the NOx purification efficiency decreases to a large extent after repeated soot regeneration.

Thus, any of the above-mentioned documents does not disclose satisfactory measures against the above-described problems.

US 2004/191133 discloses a catalyst-carried honeycomb filter including an oxidation catalyst for promoting oxidation of the particulates contained in an exhaust gas. A fine coating layer constituted of a porous ceramic having an average pore diameter smaller than that of the porous ceramic constituting the partition wall is formed on a surface of the partition wall on a purified gas outflow cell side.

Summary of the Invention

The present invention has been made in view of the above-described problems and aims to provide a catalyst-carrying filter that is installed directly under an engine, allows a gas purification catalyst layer formed in an inflow-side layer of the partition wall to reliably purify unburnt gas, allows a PM trapping layer formed in a outflow-side layer of the partition wall to trap particulate matter, and allows a PM removal catalyst layer formed in the same layer (outflow-side layer) as the PM trapping layer to reliably remove PM by causing particulate matter to efficiently come in contact with an oxidizing catalyst to improve the catalyst purification performance. In particular, the present invention aims at inhibiting a deterioration in catalyst to improve the regeneration efficiency.

According to the present invention, the following DPF is provided.

[1] A catalyst-carrying filter as set out in claim 1.

[2] The catalyst-carrying filter according to [1], wherein the PM removal catalyst layer does not contain a noble metal.

[3] The catalyst-carrying filter according to [1] of [2], wherein an amount of Ce contained in the PM removal catalyst layer is larger than that of the gas purification catalyst layer by a factor of 1.2 to 10.

[4] The catalyst-carrying filter according to any one of [1] to [3], wherein the gas purification catalyst includes a NOx removal catalyst.

[5] The catalyst-carrying filter according to any one of [1] to [4], wherein the PM removal catalyst layer has an average pore size smaller than that of the gas purification catalyst layer.

[6] The catalyst-carrying filter according to any of [1] to [5], wherein the PM removal catalyst layer has an average pore size of 1 to 15 $\mu$m.

[7] The catalyst-carrying filter according to any of [1] to [6], wherein the gas purification catalyst layer has an average pore size of 35 to 80 $\mu$m.

[8] A method of producing the catalyst-carrying filter according to any one of [1] to [7], the method being as set out in claim 8.

According to a catalyst-carrying filter that is installed directly under an engine of the present invention, the gas purification catalyst layer formed in the inflow-side layer of the partition wall can reliably purify unburnt gas, the PM trapping layer formed in the outflow-side layer of the partition wall can trap particulate matter, and the PM removal catalyst layer formed in the same layer (outflow-side layer) as the PM trapping layer can reliably remove PM by causing particulate matter to efficiently come in contact with the oxidizing catalyst to improve the catalyst purification performance. In particular, a deterioration in catalyst can be inhibited so that the regeneration efficiency can be improved.

Brief Description of the Drawings

FIG. 1 is a schematic view (plan view) showing a ceramic filter to which one embodiment of the present invention is applied.

FIG. 2 is a schematic view (perspective view) showing a ceramic filter to which one embodiment of the present invention is applied.

FIG. 3 is a schematic view (cross-sectional view) showing a ceramic filter to which one embodiment of the present invention is applied.

FIG. 4 is an enlarged view schematically showing a partition wall indicated by symbol P in FIG. 3 (i.e., an example of the cross section of the partition wall).

FIG. 5 is a schematic view (cross-sectional view) showing a ceramic filter to which one embodiment of the present invention is applied.

FIG. 6 is a view schematically showing the relationship between the partition wall and the PM deposition amount when a large-pore-size layer (pore size: 30 $\mu$m or more) is formed on the upstream side of the partition wall and a trapping layer is formed in the outflow-side layer of the partition wall.

FIG. 7 is a schematic view illustrative of a specimen used for permeability measurement.

FIG. 8 is a schematic view (partially enlarged cross-sectional view) showing a conventional ceramic filter.

FIG. 9 is a schematic view (perspective view) showing a ceramic filter to which one embodiment of the present invention is applied.

Reference Numerals

1, 1A: catalyst-carrying filter, 3: cell, 4: partition wall, 4a: gas-inflow-side partition wall, 4b: gas-outflow-side partition wall, 7: open end, 7a: one open end, 7b: the other open end, 8: plugging portion, 9: PM trapping layer, 10: PM removal catalyst layer, 11: gas purification catalyst layer, 13: inflow-side layer, 15: outflow-side layer, 43: inflow-side layer, 44: partition wall, 45: outflow-side layer, 49: trapping layer, 62: honeycomb segment, 63: honeycomb segment bonded article, 64: bonding material, 66: peripheral coating layer, 100: specimen, 105: rib, 107: partition wall, 109: plugging portion, 110: honeycomb filter, 113: cell, X: one open end, Y: the other open end, G: exhaust gas

Detailed Description of the Invention

Preferred embodiments of the ceramic filter of the present invention are described in detail below. Note that the present invention is not limited to the following embodiments. The present invention encompasses a wide range of ceramic filters that satisfy the requirements of the present invention.

[1] Catalyst-carrying filter

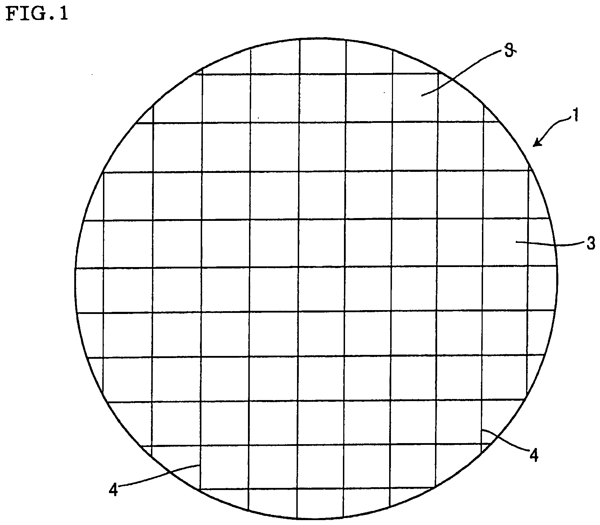

As shown in FIGS. 1 to 5, a catalyst-carrying filter 1 of the present invention includes a honeycomb-structured base material having a plurality of cells 3 that serve as exhaust gas passages and are partitioned by partition walls 4 formed of a porous ceramic having a number of pores, the partition walls 4 including a gas-inflow-side layer 13 and a gas-outflow-side layer 15, the catalyst-carrying filter 1 being installed directly under an engine. One open end 7 (7a) and the other open end 7 (7b) of the plurality of cells 3 are alternately plugged by plugging portions 8. The inflow-side layer 13 of the partition wall is constituted as a gas purification catalyst layer 11 that supports or is coated with a gas purification catalyst that promotes oxidation of gas. The outflow-side layer 15 of the partition wall is constituted as a PM trapping layer 9 that has a small average pore size so as to trap particulate matter, and as a PM removal catalyst layer 10 that supports or is coated with an oxidizing catalyst for promoting oxidation of particulate matter contained in exhaust gas.

[1-1] Gas purification catalyst and gas purification catalyst layer

The gas purification catalyst layer of the present embodiment is a layer of a gas purification catalyst and is formed by loading (coating) the gas purification catalyst on partition walls on or near the gas-inflow-side as the inflow-side layer.

The term "(exhaust) gas purification catalyst" used herein refers to a catalyst component that has a function of purifying exhaust gas and encompasses any catalyst that promotes purification of harmful components (e.g., nitrogen oxide, hydrocarbon, and carbon monoxide) contained in exhaust gas. For example, the term "(exhaust) gas purification catalyst" encompasses an oxidizing catalyst that oxidizes nitrogen oxide (NOx), a ternary catalyst that oxidizes nitrogen oxide and reduces hydrocarbons and carbon monoxide at the same time, and a NOx adsorber catalyst.

When the oxidizing catalyst is loaded (coated) as the gas purification catalyst, the gas purification catalyst layer is formed in the inflow-side layer of the partition walls as a layer that promotes purification of unburnt gas contained in exhaust gas. Since ashes are trapped by the PM trapping layer, a deterioration in the catalyst in the PM removal catalyst layer can be inhibited while reducing the total catalyst coating amount.

When the catalyst loaded or coated on the gas purification catalyst layer as the inflow-side layer is the oxidizing catalyst, the total catalyst coating amount that ensures an equivalent purification performance to be maintained after a durability test can be reduced. When the catalyst loaded or coated on the gas purification catalyst layer as the inflow-side layer is the NOx catalyst, since the local $O_2$ concentration can be reduced by regeneration of PM deposited on the trapping layer, a deterioration in the NOx catalyst can be suppressed.

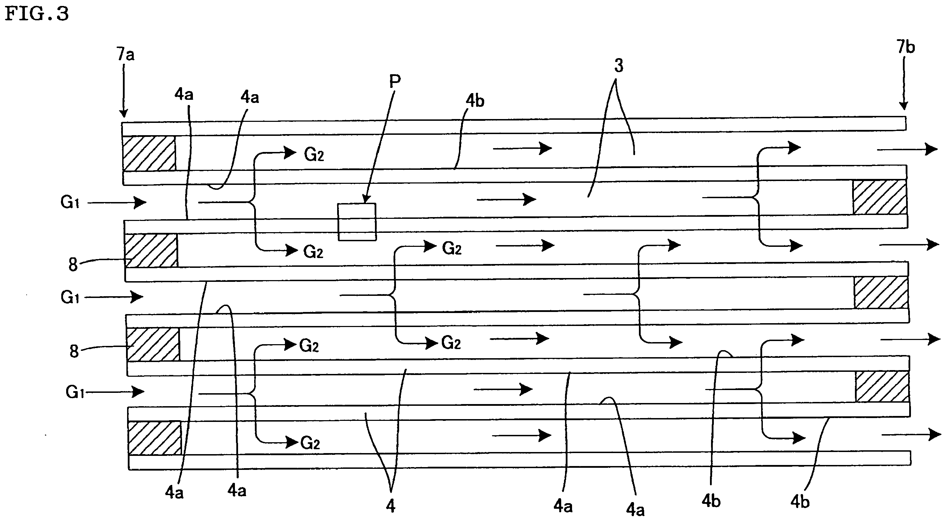

Note that the term "gas-inflow-side layer" refers to an area that corresponds to the gas-inflow-side partition wall of the honeycomb-structured base material and is formed in the gas-inflow-side and nearby partition wall. Specifically, the inflow-side layer 13 refers to a gas-inflow-side and nearby area of the partition wall 4 defining cells 3, as shown in FIGS. 3 to 5. The gas purification catalyst is loaded (coated) on this region and serves as the gas purification catalyst layer 11. Note that the term "gas-outflow-side layer" refers to a region formed of partition walls on the gas-outflow-side of the honeycomb-structured base material on and near the gas-outflow-side, as shown in FIGS. 3 to 5 and region having a small average pore size (as a PM trapping layer 9) so as to trap particulate matter. In other words, the term "gas-outflow-side layer" refers to a gas-outflow-side and nearby area of the partition wall 4 defining cell 3. The PM removal catalyst is loaded (coated) on this region and constitutes the PM removal catalyst layer 10.

Note that the structure of the partition walls of the base material is not limited to the two-layer structure that includes the gas-inflow-side layer and the gas-outflow-side layer. The partition walls may have three or more layers formed by providing an intermediate layer that does not support a catalyst between the inflow-side layer and the outflow-side layer.

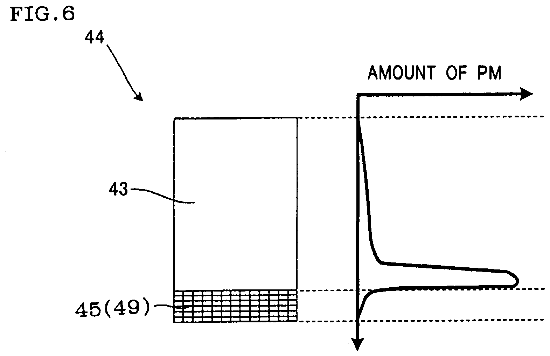

The PM trapping layer is not formed in the inflow-side layer of the partition walls because the catalyst-carrying filter is installed directly under an engine. That is, when the catalyst-carrying filter is installed under a floor, since soot discharged from an engine aggregates before reaching the DPF, the particle diameter of soot increases. As a result, soot tends to deposit in the inflow-side layer of the partition wall. On the other hand, since the catalyst-carrying filter of this embodiment is installed directly under an engine, soot aggregates to only a small extent (i.e., has a small particle diameter). Therefore, PM does not deposit in the inflow-side layer to hinder the catalyst purification process even if the PM trapping layer is not formed in the inflow-side layer of the partition wall. For example, when PM is deposited on partition walls in which a large-pore-size layer (pore size: 30 $\mu$m or more) is formed in the inflow-side layer and a trapping layer is formed in the outflow-side layer, most of the PM does not deposit in the pores in the large-pore-size layer, but is deposited in an area near the trapping layer (see FIG. 6).

In particular, when the DPF is installed directly under an engine, the size of a diesel oxidation catalyst (DOC) provided in the preceding stage of the DPF is generally very small, or the function of the DOC is generally added to a catalyzed soot filter (CSF) without providing the DDC itself due to the limited space and the like. In this case, unburnt gas (e.g., HC and CO) is not sufficiently oxidized during regeneration utilizing post injection so that it is difficult to efficiently purify soot. Therefore, unburnt gas is oxidized to achieve sufficient heat generation by coating the inflow-side layer of the partition walls with the gas purification catalyst so that soot can be burned more efficiently. As described above, when the DPF is installed directly under an engine, the regeneration efficiency can effectively be improved by forming the PM trapping layer in the outflow-side layer. FIG. 6 is a view schematically showing the relationship between the partition wall and the PM deposition amount when a large-pore-size layer (pore size: 30 $\mu$m or more) is formed in the inflow-side layer of the partition walls and a trapping layer is formed in the outflow-side layer of the partition wall.

JP-A-2007-130637 discloses a gas purification catalyst filter formed by coating a wall-flow type filter with a catalyst that removes NOx. However, since the NOx removal catalyst has low heat resistance, the catalytic performance of the NOx removal catalyst deteriorates due to heat generated during combustion of deposited soot when the NOx removal catalyst is loaded on the wall-flow type filter (DPF). As a result, the NOx purification efficiency remarkably decreases after repeated soot regeneration. According to the present invention, since the large-pore-size layer (pore size: 30 $\mu$m or more, and preferably 40 $\mu$m or more) formed in the inflow-side layer is coated with the NOx removal catalyst and the small-pore-size PM trapping layer formed in the outflow-side layer is coated with the PM removal catalyst, soot is deposited in the large-pore-size layer to only a small extent so that a deterioration in the NOx removal catalyst can be suppressed.

It is preferable that the gas purification catalyst layer have a moderate average pore size. If the average pore size of the gas purification catalyst layer is too small, PM may deposit on the surface of the gas purification catalyst layer. If the average pore size of the gas purification catalyst layer is too large, unburnt gas to be purified by the gas purification catalyst layer may pass through the gas purification catalyst layer without coming in contact with the gas purification catalyst so that purification may become insufficient. Moreover, soot trapped by the PM trapping layer described above may hinder the inflow of exhaust gas into the partition wall.

As the oxidizing catalyst used as the gas purification catalyst, a noble metal such as platinum (Pt), palladium (Pd), or rhodium (Rh) is suitably used.

When the oxidizing catalyst is loaded on the catalyst-carrying filter of the present invention as the gas purification catalyst, other catalysts and a purification material may further be loaded on the catalyst-carrying filter. For example, a NOx adsorber catalyst (e.g., alkali metal (e.g., Li, Na, K, or Cs) or alkaline earth metal (e.g., Ca, Ba, or Sr)), a ternary catalyst, a promoter such as cerium (Ce) oxide and/or zirconium (Zr) oxide, a hydrocarbon (HC) adsorbent, and the like may be loaded on the gas purification catalyst layer. For example, a NOx adsorber catalyst (e.g., alkali metal (e.g., Li, Na, K, or Cs) or alkaline earth metal (e.g., Ca, Ba, or Sr)), a ternary catalyst, a promoter such as cerium (Ce) oxide and/or zirconium (Zr) oxide, a hydrocarbon (HC) adsorbent, and the like may be loaded.

The method of loading the catalyst component such as the oxidizing catalyst or the NOx adsorber catalyst on the partition wall of the honeycomb structure is not particularly limited. For example, the partition walls of the honeycomb structure may be wash-coated with a catalyst solution containing the catalyst component, and then heated to high temperature so that the catalyst component is secured on the gas purification catalyst layer. It is preferable that the catalyst component such as the oxidizing catalyst or the NOx adsorber catalyst be loaded on a heat-resistant inorganic oxide having a large specific surface area (e.g., alumina) in advance, and then loaded on the partition walls of the honeycomb structure so that the catalyst component is loaded in a highly dispersed state.

It is more preferable that the gas purification catalyst include the NOx removal catalyst (NOx purification catalyst). When the gas purification catalyst is a NOx purification catalyst, the gas purification catalyst layer of this embodiment is formed in the inflow-side layer of the partition walls as a layer that removes (purifies) NOx. Specifically, the gas purification catalyst is loaded on the partition walls on and near the gas-inflow-side in the inflow-side layer of the partition walls to form a gas purification catalyst layer. When the gas purification catalyst layer is formed by loading (coating) the NOx purification catalyst as the gas purification catalyst, the NOx purification efficiency can be increased by the gas purification catalyst layer formed in the inflow-side layer of the partition walls. Therefore, the regeneration efficiency can be improved in combination with purification by the outflow-side layer as the PM trapping layer and the PM removal catalyst layer. Even if ashes and a sulfur component enter the gas purification catalyst layer, a deterioration in the NOx catalyst does not occur since the gas purification catalyst layer has a moderate pore size.

The NOx purification catalyst may include a metal oxide selected from the group consisting of alumina, zirconia, titanium, and combinations thereof as a coating material.

Examples of the NOx removal catalyst (NOx purification catalyst) include NOx adsorber-reduction catalysts and NOx selective reduction catalysts.

The term "NOx adsorber-reduction catalyst" refers to a catalyst that adsorbs NOx when the air/fuel ratio is in a lean state, and reduces the adsorbed NOx to $N_2$ during a rich spike at given intervals (i.e., when exhaust gas is made fuel-rich). For example, the NOx adsorber-reduction catalyst may be obtained by loading, on a metal oxide (e.g., alumina, zirconia, or titania) coating material, a noble metal (e.g., platinum, palladium, or rhodium) and at least one metal selected from the group consisting of alkali metals and alkaline earth metals.

The term "NOx selective reduction catalyst" refers to a catalyst that selectively reacts NOx with a reduction component in a lean atmosphere to purify NOx. For example, the NOx selective reduction catalyst may be obtained by loading, on a coating material that contains zeolite or alumina, at least one metal selected from the group consisting of copper, cobalt, nickel, iron, gallium, lanthanum, cerium, zinc, titanium, calcium, barium, and silver.

The method of loading the gas purification catalyst is not particularly limited. For example, the partition wall of the honeycomb structure may be wash-coated with a catalyst solution containing the catalyst component, and then heated at high temperature so that the catalyst component is secured on the partition wall. Alternatively, ceramic slurry may be caused to adhere to the inflow-side layer of the partition walls of the honeycomb-structured base material using a known ceramic film formation method (e.g., dipping), and then dried and fired to form a thin purification catalyst layer. The average pore size of the gas purification catalyst layer may be adjusted to the desired value by controlling the grain size and the mixing ratio of framework particles in the ceramic slurry, for example. The porosity of the gas purification catalyst layer may be adjusted to the desired value by controlling the grain size of framework particles in the ceramic slurry and the amount of pore former, for example. The thickness of the coating layer may be adjusted to the desired value by controlling the concentration of the ceramic slurry and the film formation time, for example.

It is preferable that the catalyst component such as the ternary catalyst, the oxidizing catalyst, or the NOx adsorber catalyst be loaded on a heat-resistant inorganic oxide having a large specific surface area (e.g., alumina) in advance, and then loaded on the partition walls of the honeycomb structure so that the catalyst component is loaded in a highly dispersed state.

[1-2] PM trapping layer

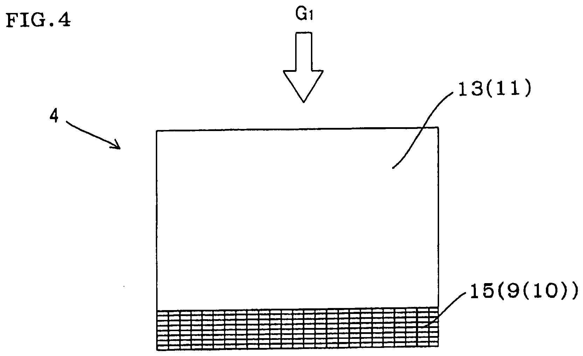

In the catalyst-carrying filter of this embodiment, the outflow-side layer of the partition walls includes the PM trapping layer that has a small average pore size so as to trap particulate matter (PM) that is contained in exhaust gas and mainly contains soot (graphite). Ashes can reliably be trapped by the PM trapping layer by reducing the average pore size of the outflow-side layer of the partition walls. As a result, a deterioration in the catalyst of the PM removal catalyst layer formed in the same layer as the PM trapping layer can be inhibited so that the regeneration efficiency can be improved in combination with the gas purification catalyst applied to (supported in) the inflow-side layer. Specifically, the PM trapping layer 9 is formed in the gas-outflow-side partition walls and near the gas-outflow side (outflow-side layer 15) as shown in FIG. 4.

The PM trapping layer is formed in the outflow-side layer of the partition walls since the catalyst-carrying filter is installed directly under an engine. That is, since soot aggregates to only a small extent (i.e., has a small particle diameter), PM does not deposit in the inflow-side layer to hinder the catalyst purification process even if the PM trapping layer is not formed in the inflow-side layer of the partition walls.

[1-3] PM removal catalyst layer

The PM removal catalyst layer is formed by loading, on the PM trapping layer, an oxidizing catalyst (i.e., PM removal catalyst). The PM removal catalyst layer is formed (supported) in the outflow-side layer of the partition walls of the honeycomb-structured base material. That is, the PM removal catalyst layer is formed in the outflow-side layer of the partition walls, i.e., in the region on the surface of the partition wall and the inner wall of the pore formed in the partition wall and reliably traps and oxidizes PM due to the function as the PM trapping layer, which traps PM and the function of oxidizing PM. As a result, the PM removal catalyst layer and the gas purification catalyst layer can significantly improve the regeneration efficiency of the catalyst-carrying filter in a synergistic manner.

The PM removal catalyst layer is formed in this manner for the following reason. Specifically, when the DPF in which the inflow-side layer of the partition walls has a large pore size and the outflow-side layer of the partition walls has a small pore size is installed directly under an engine, soot aggregates to only a small extent (i.e., has a small particle diameter) since the soot reaches the DPF along a short path. Therefore, most of the soot deposits in the trapping layer of the outlet-side of the partition walls without depositing in the large-pore-size layer (inflow-side layer) of the partition wall.

The details are described below with reference to FIGS. 3 to 5. The PM trapping layer 9 having an average pore size smaller than that of the gas-inflow-side and nearby partition wall 4a is formed in the gas-outflow-side partition wall 4b (outflow-side layer 15 of cells 3). The PM removal catalyst is loaded (coated) on the PM trapping layer 9 and serves as the PM removal catalyst layer 10. FIG. 3 is a schematic view showing the longitudinal cross section of the catalyst-carrying filter of this embodiment, and FIG. 4 is a view schematically showing the cross section of part of the partition wall of the catalyst-carrying filter of this embodiment.

[1-3-1] Oxidizing catalyst

The oxidizing catalyst is loaded (coated) on the PM trapping layer to form the PM removal catalyst layer. Therefore, the oxidizing catalyst serving as the PM removal catalyst comes in contact with PM in the PM removal catalyst layer to promote oxidation of PM contained in exhaust gas.

As the oxidizing catalyst, a noble metal such as platinum (Pt), palladium (Pd), or rhodium (Rh) is suitably used.

In the catalyst-carrying filter of the present invention, it is necessary that at least the oxidizing catalyst be supported in the PM removal catalyst layer. Note that other catalysts and a purification material may be further be supported in the PM removal catalyst layer. For example, a NOx adsorber catalyst (e.g., alkali metal (e.g., Li, Na, K, or Cs) or alkaline earth metal (e.g., Ca, Ba, or Sr)), a ternary catalyst, a promoter such as cerium (Ce) oxide and/or zirconium (Zr) oxide, a hydrocarbon (HC) adsorbent, and the like may be supported. Note that these materials may be supported in the gas purification catalyst layer described later.

For example, the PM removal catalyst may include Ce and at least one other rare earth metal, alkaline earth metal, or transition metal.

The rare earth metal may be selected from Sm, Gd, Nd, Y, Zr, Ca, La, Pr, and the like.

The alkaline earth metal included in the PM removal catalyst may be selected from Mg, Ca, Sr, Ba, and the like.

The transition metal included in the PM removal catalyst may be selected from Mn, Fe, Co, Ni, Cu, Zn, Sc, Ti, V, Cr, and the like.

In the method of loading on the partition wall of the honeycomb structure, the catalyst component such as the oxidizing catalyst or the NOx adsorber catalyst is not particularly limited. For example, the partition wall of the honeycomb structure may be wash-coated with a catalyst solution containing the catalyst component, and then heated to high temperature so that the catalyst component is secured on the gas purification catalyst layer. Alternatively, ceramic slurry may be caused to adhere to the outflow-side layer of the partition walls of the honeycomb-structured base material using a known ceramic film formation method (e.g., dipping), and dried and fired to form a thin PM removal catalyst layer. The average pore size of the outflow-side layer (PM removal catalyst layer) may be adjusted to the desired value by controlling the grain size and the mixing ratio of framework particles in the ceramic slurry, for example. The porosity of the outflow-side layer (PM removal catalyst layer) may be adjusted to the desired value by controlling the grain size of framework particles in the ceramic slurry and the amount of pore former, for example. The thickness of the coating layer may be adjusted to the desired value by controlling the concentration of the ceramic slurry and the film formation time, for example. Note that two or more coating layers may be formed.

It is preferable that the catalyst component such as the oxidizing catalyst or the NOx adsorber catalyst be supported on a heat-resistant inorganic oxide having a large specific surface area (e.g., alumina) in advance, and then supported on the partition walls of the honeycomb structure so that the catalyst component is supported in a highly dispersed state.

The PM removal catalyst layer may be formed by loading a catalyst slurry inside the pores formed in the PM trapping layer by applying a known catalyst supporting method (e.g., attraction method), and then drying and firing the catalyst slurry, for example.

[1-4] Relationship between PM removal catalyst layer and gas purification catalyst layer

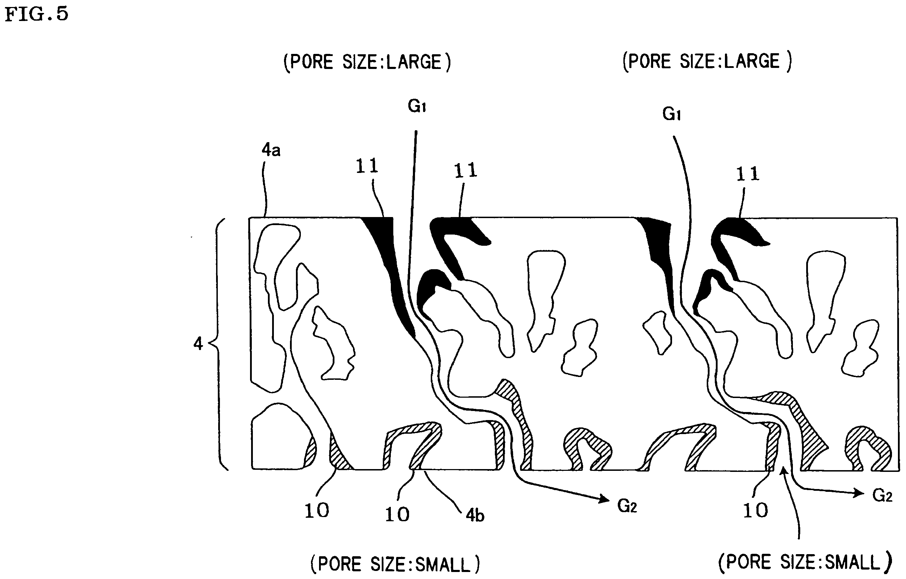

A state in which exhaust gas is purified by the inflow-side layer (gas purification catalyst layer) and the outflow-side layer (PM trapping layer and PM removal catalyst layer) is described in detail below with reference to FIG. 5. FIG. 5 is a schematic view (enlarged cross-sectional view) showing a ceramic filter of the present invention.

As shown in FIG. 5, the gas Gi enters the cell, flows into the partition walls through the inflow-side partition walls 4a, and flows out through the outflow-side partition walls 4b. The openings in the inflow-side partition walls 4a are coated with the gas purification catalyst layer 11, and the openings in the outflow-side partition walls 4b are coated with the PM removal catalyst layer 10. Therefore, unburnt gas can be reliably purified by the gas-inflow-side partition walls, and the PM trapping layer can come in contact with ashes to trap ashes. Therefore, since ashes do not reach the inside of the PM removal catalyst layer, a deterioration in the catalyst provided in the partition walls on the gas-outflow-side and near the gas-outflow-side can be inhibited.

It is preferable that the PM removal catalyst layer and the gas purification catalyst layer of this embodiment have the following relation.

The PM removal catalyst layer support is coated with the oxidizing catalyst in an amount larger than that of the gas purification catalyst layer. When the DPF is installed directly under an engine, soot aggregates to only a small extent (i.e., has a small particle diameter) since the soot reaches the DPF along a short path. Therefore, most of soot is deposited in the trapping layer of the outlet-side partition walls without being deposited in the large-pore-size layer (inflow-side layer) of the partition walls. Therefore, unburnt gas can be reliably oxidized to achieve sufficient heat generation by coating the PM trapping layer (i.e., soot combustion area) with the oxidizing catalyst in an amount larger than that of the gas purification catalyst layer so that soot can be burned more efficiently.

Specifically, if the amount of oxidizing catalyst is so small that PM is not sufficiently processed by the PM removal catalyst layer, the regeneration efficiency cannot be improved. Moreover, since ashes may enter the PM removal catalyst layer, the catalyst may easily deteriorate. If the amount of oxidizing catalyst supported in the gas purification catalyst layer (inflow-side layer) is too large, the pores in the inflow-side layer may be clogged so that a pressure loss due to soot is likely to occur. If the total amount of catalyst supported on the catalyst-carrying filter (PM removal catalyst layer and gas purification catalyst layer) is increased to a large extent, cracks and the like may easily occur during regeneration. Therefore, it is preferable to adjust the total amount of catalyst supported on the catalyst-carrying filter.

According to this configuration, unburnt gas can be reliably oxidized by the gas purification catalyst layer while suppressing the amount of catalyst used for the catalyst-carrying filter. Moreover, PM can be reliably removed by the PM removal catalyst layer.

The oxidation catalyst is supported in the PM removal catalyst layer in an amount larger than that of the gas purification catalyst layer by a factor of 1.02 to 5. If the amount of oxidizing catalyst supported in the PM removal catalyst layer is larger than that of the gas purification catalyst layer by a factor of more than 5, the amount of gas purification catalyst supported in the inflow-side layer is too small. As a result, CO produced due to incomplete combustion during soot regeneration is not sufficiently oxidized in the inflow-side layer (gas purification catalyst layer) so that the CO emission may be reduced (CO slippage may occur). Therefore, it is preferable to adjust the amount of oxidizing catalyst within the above desired range. That is, the gas purification catalyst layer and the PM removal catalyst layer are made to function sufficiently by adjusting the amount of oxidizing catalyst within the above desired range so that the regeneration efficiency can be improved. In particular, the effects of the present invention can then be achieved due to the characteristics of each catalyst layer.

When the oxidizing catalyst is loaded on the PM removal catalyst layer in an amount larger than that of the gas purification catalyst layer by a factor of 1.02 to 5, (1) the amount of oxidizing catalyst supported in the PM removal catalyst layer and the gas purification catalyst layer may be adjusted within the above desired range while increasing the total amount of catalyst, or (2) the amount of oxidizing catalyst supported in the PM removal catalyst layer and the gas purification catalyst layer may be adjusted within the above desired range without changing the total amount of catalyst. When adjusting the amount of oxidizing catalyst supported in the PM removal catalyst layer and the gas purification catalyst layer within the above desired range while increasing the total amount of catalyst, it is preferable to appropriately increase the total amount of catalyst since problems may occur if the total amount of catalyst is increased to a large extent. It is more preferable to adjust the amount of oxidizing catalyst supported in the PM removal catalyst layer and the gas purification catalyst layer within the above desired range without changing the total amount of catalyst. In this case, an increase in costs and a decrease in strength of the entire filter (e.g., cracks during regeneration) can be inhibited.

The total amount of oxidizing catalyst loaded (coated) on the PM removal catalyst layer and the gas purification catalyst layer is 15 to 180 g/l. If the total amount of oxidizing catalyst is less than 15 g/l, the regeneration efficiency may decrease. Moreover, since the amount of catalyst in the inflow-side layer may become insufficient, the gas emission may not reach 100%. If the total amount of oxidizing catalyst is more than 180 g/l, the pores formed in the trapping layer (outflow-side layer) may be clogged by the catalyst so that a pressure loss due to soot may occur. If the amount of pressure loss due to soot increases, the output during acceleration decreases to an impractical level during actual use.

The amount of noble metal included in the PM removal catalyst layer is smaller than that of the gas purification catalyst layer. The amount of noble metal can be reduced to reduce costs.

It is also preferable that the PM removal catalyst layer does not include a noble metal. The amount of noble metal can be reduced to reduce costs.

It is preferable that Ce be added to the PM removal catalyst layer in an amount larger than that of the gas purification catalyst layer by a factor of 1.2 to 10 (i.e., ceria amount ratio=1.2 to 10). If the ceria amount ratio is less than 1.2, the regeneration efficiency may decrease.

It is preferable that the PM trapping layer have a small average pore size so as to trap particulate matter. However, it is preferable that the PM trapping layer have an average pore size appropriate for trapping particulate matter. That is, if the average pore size of the outflow-side layer of the partition wall is too small, the upper part (ash inflow inlet or its near the inlet) of the pores in the PM trapping layer may be clogged by soot when ashes are trapped by the PM trapping layer. As a result, gas may be inhibited from flowing into the inside of the outflow-side layer of the partition walls. On the other hand, if the average pore size of the outflow-side layer of the partition walls is too large, it is difficult to load the outflow-side layer with the PM removal catalyst. Even if the PM removal catalyst layer can be formed by loading the outflow-side layer with the PM removal catalyst, ashes may insufficiently come in contact with the PM trapping layer, but may enter the PM removal catalyst layer so that a deterioration in the catalyst may occur. As a result, PM may insufficiently be oxidized. This may result in a decrease in catalyst purification performance.

In other words, it is preferable that an appropriate amount of an oxidizing catalyst (PM removal catalyst) be loaded (coated) on the PM removal catalyst layer. When an appropriate amount of a PM removal catalyst is loaded (coated) on the PM removal catalyst layer, PM can sufficiently be trapped. Moreover, the exhaust gas purification process can be promoted in combination with purification of unburnt gas by the gas purification catalyst layer so that the regeneration efficiency can be improved.

When the average pore size of the PM removal catalyst layer is smaller than that of the gas purification catalyst layer, even if a defect (pore having a large pore size) is present in a part of in the partition walls, a situation in which exhaust gas is concentrated on the defect can be inhibited. Moreover, a situation in which particulate matter leaks through the defect toward the gas-outflow-side cells can be inhibited.

As shown in FIGS. 3 to 5, it is preferable that the PM trapping layer having an average pore size smaller than that of the partition walls on the gas-inflow-side and near the gas inflow side be formed on the surface of the partition walls 4 on the gas-outflow-side and near the gas-outflow side that partitions the cells of the honeycomb structure, for example. In FIGS. 3 and 4, the pores and the oxidizing catalyst are omitted.

The average pore size of the PM trapping layer is more preferably 1 to 15 μm. If the average pore size is less than 1 μm, the permeability decreases so that the permeation resistance of the pores tends to increase rapidly. If the average pore size is more than 15 μm, the trapping performance decreases so that the PM emission may exceed the Euro-5 regulation value. Therefore, the effects of the present invention can be achieved by adjusting the average pore size of the PM trapping layer within the above desired range.

The term "permeability" used herein refers to a value calculated by the following expression (1). The term "permeability" refers to an index that indicates the passage resistance when a specific gas passes through a sample (partition wall). In the expression (1), C indicates the permeability ($m^2$), F indicates the gas flow rate ($cm^3/s$), T indicates the thickness (cm) of the sample, V indicates the gas viscosity (dynes·sec/$cm^2$), D indicates the diameter (cm) of the sample, and P indicates the gas pressure (PSI). In the expression (1), 13.839 PSI equals 1 atm, and 68947.6 dynes·sec/$cm^2$ equals 1 PSI.

$$C = \frac{8FTV}{\pi D^2 (P^2 - 13.839^2)/13.839 \times 68947.6} \times 10^{-4} \quad (1)$$

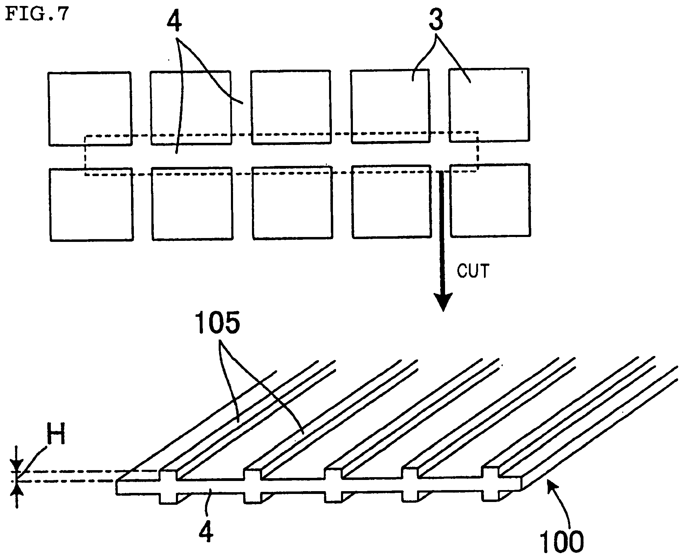

The permeability is calculated as follows. As shown in FIG. 7, a honeycomb structure or a honeycomb-structured catalyst body is cut into a rectangular or disc-like specimen 100 so that the rib height H is 0.2 mm or less. The passage resistance when passing air at room temperature through the partition wall 4 is measured, and the permeability is calculated by the expression (1). It is desirable to use a fluid seal (e.g., grease) so that air does not leak through a gap between a rib 105 and a seal. The flow rate of air is adjusted so that air passes through the partition wall at a flow rate of 0.1 cm/sec or more and 1 cm/sec or less. In the honeycomb-structured catalyst body, the catalyst coating layer is provided on the cell inner wall and the rib in a different way. In the present invention, since a large amount of catalyst adheres to the inner surface of the pore in the partition wall (i.e., the influence of the rib is small), the permeability of the partition wall of the honeycomb-structured catalyst body can be measured in the same manner as the honeycomb structure.

The terms "average pore size" and "porosity" used herein respectively refer to the average pore size and the porosity measured by mercury porosimetry.

The average pore size of the gas purification catalyst layer is preferably 35 to 80 $\mu$m, and more preferably 40 to 80 $\mu$m. This ensures that unburnt gas is reliably purified. If the average pore size of the gas purification catalyst layer is too small, the upper part (gas inflow side or nearby area) of the pores in the gas purification catalyst layer may be clogged by soot. As a result, unburnt gas may not come in contact with the gas purification catalyst. If the average pore size of the gas purification catalyst layer is too large, it is difficult to load the gas purification catalyst layer with the gas purification catalyst. Even if the gas purification catalyst layer can be formed by loading the gas purification catalyst layer with the gas purification catalyst, unburnt gas flows without coming in contact with the gas purification catalyst. Therefore, removal of PM by the PM removal catalyst is hindered.

It is preferable that the PM removal catalyst layer have a porosity of 40 to 90%, and more preferably 50 to 80%. If the porosity of the PM removal catalyst layer is less than 40%, a pressure loss may increase. If the porosity of the PM removal catalyst layer is more than 90%, since the strength of the PM removal catalyst layer may become insufficient, the PM removal catalyst layer may be peeled off from the surface of the partition wall. If the porosity of the PM removal catalyst layer is less than 40%, since a large amount of particulate matter is deposited, filter regeneration becomes difficult.

When the porosity of the PM removal catalyst layer is higher than the porosity of the porous ceramic that forms the partition wall by 5% or more, a pressure loss (permeation pressure loss) in the PM removal catalyst layer can be reduced.

It is preferable that the gas purification catalyst layer have a porosity of 30 to 70%, and more preferably 35 to 60%. If the porosity of the gas purification catalyst layer is less than 30%, a pressure loss may increase. Moreover, PM may insufficiently come in contact with the oxidizing catalyst in the PM removal catalyst layer formed in the gas inflow area of the cell. If the porosity of the gas purification catalyst layer is more than 70%, since the strength of the gas purification catalyst layer may become insufficient, the gas purification catalyst layer may be peeled off from the surface of the partition wall.

[1-5] Honeycomb structure

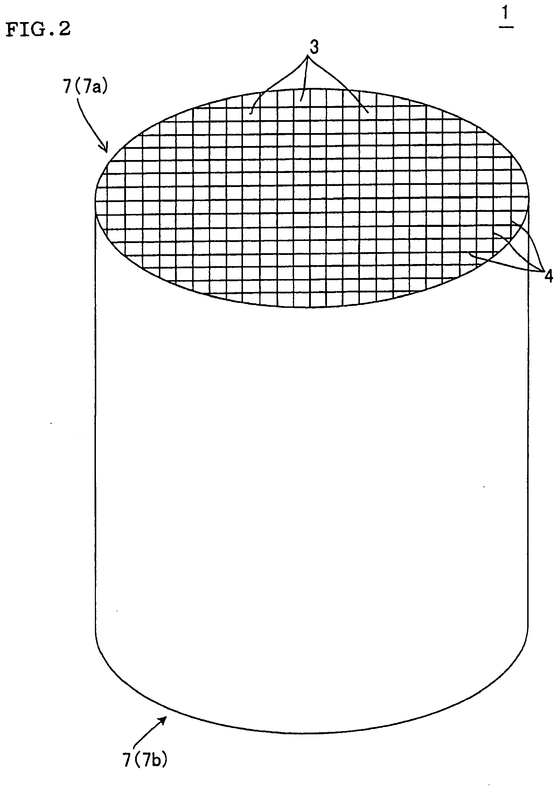

As shown in FIGS. 1 to 3, the honeycomb-structured base material of this embodiment has a plurality of cells (exhaust gas passages) partitioned by the partition walls 4 formed of a porous ceramic having a number of pores. The honeycomb-structured base material is configured as the catalyst-carrying filter 1 in which the partition wall that partitions the cells includes the gas-inflow-side layer 13 and the gas-outflow-side layer 15. One open end 7a and the other open end 7b of the cells are alternately plugged by the plugging portions 8. Note that the overall shape of the honeycomb structure is not particularly limited. For example, the honeycomb structure may have a cylindrical shape (see FIGS. 1 and 2), a quadrangular prism shape, a triangular prism shape, or the like.

The shape of the cell of the honeycomb-structured base material (i.e., the shape of the cell in the cross section perpendicular to the cell formation direction) may be quadrilateral (see FIG. 1), hexagonal, triangular, or the like. Note that the shape of the cell is not limited thereto, but may be an arbitrary known shape. The shape of the cell is preferably circular or polygonal having four or more sides. Specifically, since the catalyst is not concentrated on the corner in the cross section of the cell, the thickness of the catalyst layer can be made uniform. A hexagonal cell is particularly preferable taking account of the cell density, the open ratio, and the like.

The cell density of the honeycomb-structured base material is not particularly limited. When using the honeycomb-structured base material as the catalyst-carrying filter of this embodiment, the cell density is preferably 6 to 1500 cells/in$^2$ (0.9 to 233 cells/cm$^2$). The thickness of the partition wall is preferably 20 to 2000 $\mu$m.

When using the honeycomb-structured base material as the catalyst-carrying filter of this embodiment, it is preferable that one open end and the other open end of the cells of the honeycomb-structured base material be alternately plugged. As shown in FIG. 3, the honeycomb structure that has a plurality of cells 3 (exhaust gas passages) partitioned by the partition walls 4 formed of a porous ceramic having a number of pores is formed to have a structure in which one open end 7a and the other open end 7b of the cells 3 are alternately plugged by the plugging portions 8, for example. According to this honeycomb structure, when the exhaust gas Gi has flowed into the exhaust gas inflow cells 3 that open toward the exhaust-gas-inlet-side end face A, particulate matter contained in the exhaust gas Gi is trapped by the partition walls 4 when the exhaust gas Gi passes through the partition walls 4, and purified gas $G_2$ from which particulate matter has been removed flows out from purified gas outflow cells 3 that open toward the exhaust-gas-outlet-side end face (the other open end 7b).

The material for the honeycomb-structured base material is not particularly limited. A ceramic may suitably be used as the material for the honeycomb-structured base material. It is preferable to use cordierite, silicon carbide, alumina, mullite, or silicon nitride from the viewpoint of strength, heat resistance, corrosion resistance, and the like.

The honeycomb-structured base material may be produced by mixing and kneading ceramic framework particles and water optionally with an organic binder (e.g., hydroxypropoxylmethyl cellulose or methyl cellulose), a pore former (e.g., graphite, starch, or synthetic resin), a surfactant (e.g., ethylene glycol or fatty acid soap), and the like to prepare kneaded clay, forming the kneaded clay to the desired shape, drying the formed clay to obtain a formed article, and firing the formed article, for example.

The honeycomb structure may be produced as follows. Note that the method of producing the honeycomb structure is not limited thereto, and a known method may be employed.

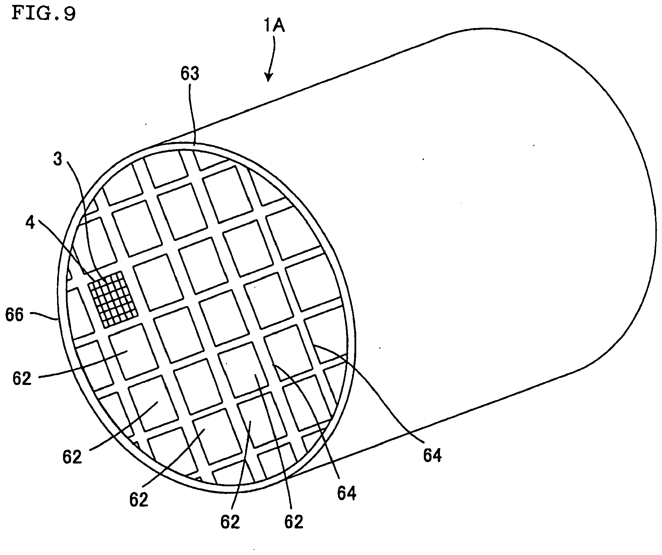

For example, when the honeycomb structure is a honeycomb segment bonded article 63 that includes a plurality of honeycomb segments 62 (see FIG. 9), and is produced by bonding the honeycomb segments 62 by means of a bonding material 64 and cutting the outer peripheral surface to the desired shape, the honeycomb structure may be produced as follows.

The honeycomb segment is produced. As the honeycomb segment raw materials, an SiC powder and an Si metal powder are mixed in a mass ratio of 80:20. After the addition of starch and a resin foam (pore former), methyl cellulose, hydroxypropoxylmethyl cellulose, a surfactant, and water are added to the mixture to obtain kneaded clay having plasticity. The clay is extruded using a specific die to obtain a honeycomb segment formed article having the desired shape. The resulting honeycomb segment formed article is dried using a microwave dryer, completely dried using a hot-blast dryer, plugged, and calcined.

The honeycomb segment formed article is calcined for degreasing at 550°C for about three hours in an oxidizing atmosphere, for example. Note that the calcining conditions are preferably adjusted according to the organic substance (e.g., organic binder, dispersant, and pore former) in the honeycomb formed article. The combustion temperature of the organic binder is normally about 100 to 300°C, and the combustion temperature of the pore former is normally about 200 to 800°C. Therefore, the calcining temperature may be set at about 200 to 1000°C. The calcining time is normally about 3 to 100 hours.

The honeycomb segment formed product is then fired. The term "firing" refers to sintering the forming raw material contained in the calcined body to densify the material so that the resulting product has predetermined strength. The firing conditions (temperature and time) differ depending on the type of forming raw material. The firing conditions may be appropriately selected according to the type of forming raw material. For example, when firing the honeycomb segment formed article in an inert atmosphere (argon), the firing temperature is generally set at about 1400 to 1500°C, for example.

The PM trapping layer is then formed on the gas-outflow-side walls (i.e., outflow-side layer). The PM trapping layer is formed by immersing the honeycomb segment in slurry that contains a silicon carbide powder, and firing (firing for forming the PM trapping layer) the honeycomb segment. The average particle diameter of the silicon carbide powder contained in the slurry is preferably 0.3 to 5 $\mu$m. The silicon carbide powder is preferably dispersed in a dispersion medium (e.g., organic polymeric material). The viscosity of the slurry is preferably adjusted to about 50,000 cp. The firing temperature is preferably about 1400 to 1500°C. The inflow-side layer and the PM trapping layer (outflow-side layer) are formed as two layers in this manner. Each layer is coated with a catalyst in a catalyst supporting step described later.

A plurality of honeycomb segments (sintered articles) having the desired dimensions are obtained by the above-mentioned steps. Bonding slurry prepared by mixing aluminosilicate fibers, colloidal silica, polyvinyl alcohol, and silicon carbide is applied to the periphery of each honeycomb segment. The honeycomb segments are then compression-bonded and dried with heating to obtain a honeycomb segment bonded product having a quadrangular prism shape. The honeycomb segment bonded article is ground to a cylindrical shape. The periphery of the resulting article is coated with a peripheral coating layer formed of the same material as the honeycomb segment formed article. The peripheral coating layer is then dried and cured to obtain a cylindrical honeycomb structure having a segmented structure.

The plugging portion is formed as follows. Plugging slurry is stored in a storage container. The end face of the honeycomb structure provided with a mask is immersed in the plugging slurry contained in the storage container so that the openings of the cells that are not provided with the mask are filled with the plugging slurry to form plugging portions. The other ends of the cells that are plugged on one end are masked and plugged in the same manner as described above to form plugging portions. As a result, the other ends of the cells are alternately plugged in a checkered pattern. The cells may be plugged after firing the honeycomb formed article to form a honeycomb fired body.

The same material as the raw material for the honeycomb segment is preferably used as the plugging material. In this case, since the plugging material and the honeycomb segment have the same expansion coefficient during firing, the durability of the honeycomb structure can be increased.

For example, when using cordierite as the material for the partition walls, a dispersion medium (e.g., water), a pore former, an organic binder, and a dispersant are added to a cordierite-forming raw material. The mixture is kneaded to prepare kneaded clay. The kneaded clay may be prepared by kneading the cordierite-forming raw material (forming raw material) using a kneader, a vacuum kneader, or the like though the means is not limited thereto. The cordierite raw material is preferably fired at 1410 to 1440°C for about 3 to 10 hours.

The clay thus prepared may be extruded using a die having the desired cell shape, partition wall thickness, and cell density, for example.

[2] First production method of the present embodiment

According to one embodiment of the method of producing the catalyst-carrying filter of the present invention, the catalyst-carrying filter is preferably produced by separately coating the honeycomb structure with the gas purification catalyst and the PM removal catalyst. This facilitates the forming process so that uniform products can be obtained.

Specifically, a honeycomb structure (that has been bonded and processed) in which the PM trapping layer is formed on the downstream side (outflow-side layer) of the partition wall is provided.

A slurry of an oxidizing catalyst (gas purification catalyst applied to the inflow-side layer of the partition walls of the honeycomb structure) and slurry of a PM removal catalyst applied to the outflow-side layer of the partition walls are prepared. The outflow-side cells of the honeycomb structure (i.e., where the PM trapping layer is formed) are immersed in the slurry of the PM removal catalyst to a specific depth. The slurry is absorbed through the inflow-side cells (i.e., where the PM trapping layer is not formed) for a predetermined time while adjusting the absorption pressure and the absorption flow rate so that the PM removal catalyst is supported in the outflow-side layer (PM trapping layer). The honeycomb structure is then dried at 120°C for two hours, and the gas purification catalyst is secured on the honeycomb structure at 550°C for one hour. The inflow-side cells of the honeycomb structure are then immersed in the slurry of the gas purification catalyst to a predetermined depth. The slurry is absorbed through the outflow-side cells for a predetermined time while adjusting the absorption pressure and the absorption flow rate so that the gas purification catalyst is supported in the inflow-side layer. The honeycomb structure is then dried at 120°C for two hours, and the PM removal catalyst is secured on the honeycomb structure at 550°C for one hour. A catalyst-carrying filter is thus obtained.

An example in which (1) the gas purification catalyst is supported, dried, and secured, and the PM removal catalyst is then supported, dried, and secured has been described above. Note that the catalyst supporting method is not limited thereto. For example, (2) the gas purification catalyst may be supported and dried, the PM removal catalyst may then be supported and dried, and the catalysts may then be secured (see the second production method described later). Alternatively, (3) the gas purification catalyst may be supported, the PM removal catalyst may then be supported, and the catalysts may then be dried and secured. The drying conditions and the firing conditions are the same as described above.

The gas purification catalyst and the PM removal catalyst may be applied in the reverse order. That is, the gas purification catalyst may be loaded after the PM removal catalyst is loaded.

According to this embodiment of the method of producing the catalyst-carrying filter, the honeycomb structure is separately coated with the PM removal catalyst and the gas purification catalyst. Note that the method of coating the honeycomb structure with the PM removal catalyst and the gas purification catalyst is not limited thereto. A known method may also be used. For example, a dipping method, an absorption method, or the like may be used.

The catalyst composition may be alumina:platinum:ceria material=7:1:2. The ceria material may have a composition of Ce:Zr:Pr:Y:Mn=60:20:10:5:5.

[3] Second production method of the present embodiment

According to another embodiment of the method of producing the catalyst-carrying filter, the catalyst-carrying filter is more preferably produced by coating the honeycomb structure with the gas purification catalyst through the inlet side and coating the honeycomb structure with the PM removal catalyst through the outlet side. According to this production method, the gas purification catalyst can be reliably supported in the inflow-side layer, and the PM removal catalyst can be reliably supported in the outflow-side layer. Therefore, variance in products can be minimized.

The second production method of the present embodiment is described in detail below. The second production method differs from the first production method as to only the method of loading the catalyst on the honeycomb structure. Therefore, the following description focuses on the method of loading the catalyst on the honeycomb structure of the present embodiment. The remaining production steps are omitted as much as possible. Regarding the remaining production steps, refer to the first production method.

In the second production method of the present embodiment, a honeycomb structure (that has been bonded and processed) in which the PM trapping layer is formed in the outflow-side layer of the partition walls is provided in the same manner as in the first production method. Slurry of an oxidizing catalyst (PM removal catalyst) and slurry of a gas purification catalyst are prepared. The catalyst composition may be the same as that used in the first production method.

The outflow-side cells of the honeycomb structure (i.e., where the PM trapping layer is formed) are immersed in the slurry of the PM removal catalyst to a predetermined depth. The slurry is absorbed through the inflow-side cells (i.e., where the PM trapping layer is not formed) for a predetermined time while adjusting the absorption pressure and the absorption flow rate so that the gas purification catalyst is supported in the outflow-side layer (PM trapping layer). The honeycomb structure is then dried at 120°C for two hours. The inflow-side cells of the honeycomb structure are then immersed in the slurry of the gas purification catalyst to a predetermined depth. The slurry is absorbed through the outflow-side cells for a predetermined time while adjusting the absorption pressure and the absorption flow rate so that the gas purification catalyst is supported in the inflow-side layer. The honeycomb structure is then dried at 120°C for two hours, and the gas purification catalyst is secured on the honeycomb structure at 550°C for one hour. A catalyst-carrying filter is thus obtained.

[4] Third production method for manufacturing a reference arrangement

According to a third production method, which is outside the scope of the invention, for producing the catalyst-carrying filter, the catalyst-carrying filter is most preferably produced by coating the honeycomb structure with the gas purification catalyst and the PM removal catalyst through the inlet side. According to this production method, the forming process can be simplified so that the forming speed can be increased. Therefore, the production costs can be reduced.

The third production method is described in detail below. The third production method differs from the first production method as to only the method of loading the catalyst on the honeycomb structure. Therefore, the following description focuses on the method of loading the catalyst on the honeycomb structure. The remaining production steps are omitted as much as possible. Regarding the remaining production steps, refer to the first production method.

In the third production method, the relationship between the amount of oxidizing catalyst supported in the inflow-side layer and the amount of catalyst supported in the outflow-side layer is controlled only when the PM removal catalyst and the gas purification catalyst are the same oxidizing catalyst, but differ in the amount of oxidizing catalyst supported in the respective layers. Specifically, a honeycomb structure (that has been bonded and processed) in which the PM trapping layer is formed in the outflow-side layer of the partition walls is prepared in advance. Slurry of an oxidizing catalyst loading (coating) on the PM removal catalyst and gas purification catalyst is prepared in advance. The honeycomb structure is gradually immersed in the slurry from the gas-inlet-side end face and completely immersed in the slurry. The absorption pressure from the gas outlet side is adjusted so that the slurry is uniformly distributed in the pores in the inflow-side layer and the outflow-side layer. The honeycomb structure is then dried at 120°C for two hours, and the catalyst is secured on the honeycomb structure at 550°C for one hour. A catalyst-carrying filter is thus obtained.

Reference and Comparative Examples

The present invention can be further understood by way of reference examples and comparative examples. Note that the reference examples and comparative examples are outside the scope of the invention. In the reference examples and comparative examples, "part" and "%" respectively refer to "part by mass" and "mass%" unless otherwise indicated. In the reference examples and comparative examples, properties were evaluated and measured by the following methods.

[1] DPF

In the reference examples and comparative examples, a catalyst-carrying filter was produced using a honeycomb structure described below.

A honeycomb structure (i.e., base material of catalyst-carrying filter) was produced as follows. A mixed powder of 80 mass% of an SiC powder and 20 mass% of an Si metal powder was used as the raw material. Methyl cellulose, hydroxypropoxylmethyl cellulose, a surfactant, and water were added to the mixed powder to prepare kneaded clay having plasticity. The kneaded clay was extruded using an extruder to obtain sixteen (4×4) honeycomb segments having the desired dimensions. The honeycomb segments were dried using microwaves and a hot blast, plugged on either end of the cells in a checkered pattern, and calcined (for degreasing) at 550°C for three hours in an oxidizing atmosphere. The honeycomb segments were fired at 1400°C for two hours in an inert atmosphere (argon) to obtain a plurality of honeycomb segments (sintered articles) in which SiC crystal particles are bonded through Si. A trapping layer was formed on the gas-outflow-side partition wall of the honeycomb segment (sintered article). The honeycomb segment (sintered article) was fired at 1400°C for two hours to obtain a honeycomb segment in which a trapping layer having a thickness of 50 $\mu$m was formed. Bonding slurry was applied to the periphery of each honeycomb segment (sintered article). The honeycomb segments were compression-bonded and dried with heating to obtain a honeycomb segment bonded article in the shape of a quadrangular prism. The honeycomb segment bonded article was ground to a cylindrical shape. The periphery of the resulting article was coated with a peripheral coating layer formed of the same material as the bonding slurry. The peripheral coating layer was dried and cured to obtain a honeycomb structure (144×152 mm, 12 mil/300 cpsi).

[2] Catalyst

An oxidizing catalyst was used. That is, the partition wall of the above-mentioned SiC-DPF was wash-coated with a catalyst solution containing an oxidizing catalyst component at the desired location and amount corresponding to Reference Examples 1 to 14 and Comparative Examples 1 to 12 described later and heated at high temperature to obtain a catalyst-carrying filter.

The composition of a catalyst A was alumina:platinum:ceria material=7:1:2 (ceria material had a composition of Ce:Zr:Pr:Y:Mn=60:20:10:5:5). A catalyst B (B-1 to B-5) and a catalyst C (C-1 to C-5) were prepared so that the ceria amount ratio differed from that of the catalyst A (the total catalytic amount was identical with that of the catalyst A) (see Table 1). A catalyst D (D-1 to D-3) and a catalyst E (E-1 to E-3) were prepared so that the platinum ratio differed from that of the catalyst A (the total catalytic amount was identical with that of the catalyst A) (see Table 1). A catalyst F was prepared so that the total catalyst amount differed from that of the catalyst A and the gas purification catalyst was provided to have an unburnt gas purification function and a NOx purification function. A catalyst G was prepared so that the total catalyst amount differed from that of the catalyst A. The details are described in Reference Examples 1 to 14 and Comparative Examples 1 to 12.

The catalyst was supported in the gas purification layer by absorbing the catalyst slurry from the outlet-side end face. The catalyst was supported in the PM trapping layer by absorbing the catalyst slurry from the inlet-side end face. The honeycomb structure was then dried at 120°C for two hours, and the catalyst was secured on the honeycomb structure at 550°C for one hour.

(Reference Examples 1 to 6)

Catalyst-carrying filters of Reference Examples 1 to 6 were obtained in the same manner as in the SiC-DPF described above, except for setting the porosity of the inflow-side layer at 60%, setting the pore size of the inflow-side layer at 50 $\mu$m, setting the porosity of the outflow-side layer at 40%, setting the pore size of the outflow-side layer at 5 $\mu$m, loading (coating) the catalyst A as the gas purification catalyst, and loading the catalyst A as the PM removal catalyst. The catalyst amount ratio, the total catalyst amount, and the like are shown in Table 1.

(Reference Examples 7 and 8)

Catalyst-carrying filters of Reference Examples 7 and 8 were obtained in the same manner as in the SiC-DPF described above except for setting the porosity of the inflow-side layer at 60%, setting the pore size of the inflow-side layer at 50 $\mu$m, setting the porosity of the outflow-side layer at 40%, and setting the pore size of the outflow-side layer at 1 $\mu$m, or setting the porosity of the inflow-side layer at 60%, setting the pore size of the inflow-side layer at 50 $\mu$m, setting the porosity of the outflow-side layer at 40%, and setting the pore size of the outflow-side layer at 15 $\mu$m, loading (coating) the catalyst A as the gas purification catalyst, and loading (coating) the catalyst A as the PM removal catalyst. The catalyst amount ratio, the total catalyst amount, and the like are shown in Table 1.

(Reference Examples 9 to 13)

A catalyst-carrying filter of Reference Example 9 was obtained in the same manner as in the SiC-DPF described above except for setting the porosity of the inflow-side layer at 60%, setting the pore size of the inflow-side layer at 50 $\mu$m, setting the porosity of the outflow-side layer at 40%, setting the pore size of the outflow-side layer at 5 $\mu$m, loading (coating) the catalyst C-2 as the gas purification catalyst, and loading (coating) the catalyst B-2 as the PM removal catalyst. A catalyst-carrying filter of Reference Example 10 was obtained in the same manner as described above except for loading (coating) the catalyst C-3 to be supported (applied) as the gas purification catalyst and loading (coating) the catalyst B-3 as the PM removal catalyst. A catalyst-carrying filter of Reference Example 11 was obtained in the same manner as described above except for loading (coating) the catalyst C-4 as the gas purification catalyst, and loading (coating) the catalyst B-4 as the PM removal catalyst. A catalyst-carrying filter of Reference Example 12 was obtained in the same manner as described above except for loading (coating) the catalyst E-1 as the gas purification catalyst and loading (coating) the catalyst D-1 as the PM removal catalyst. A catalyst-carrying filter of Reference Example 13 was obtained in the same manner as described above except for loading (coating) the catalyst E-2 as the gas purification catalyst and loading (coating) the catalyst D-2 as the PM removal catalyst. The catalyst amount ratio, the total catalyst amount, and the like of each of the catalyst-carrying filters of Reference Examples 9 to 13 are shown in Table 1.

(Reference Example 14)

A catalyst-carrying filter of Reference Example 13 was obtained in the same manner as in the SiC-DPF described above except for setting the porosity of the inflow-side layer at 60%, setting the pore size of the inflow-side layer at 50 $\mu$m, setting the porosity of the outflow-side layer at 40%, setting the pore size of the outflow-side layer at 5 $\mu$m, loading (coating) the catalyst F as the gas purification catalyst, and loading (coating) the catalyst G as the PM removal catalyst. The catalyst amount ratio, the total catalyst amount, and the like of the catalyst-carrying filters of Reference Examples 8 to 12 are shown in Table 1.

(Comparative Examples 1 to 5)

Catalyst-carrying filters of Comparative Examples 1 to 5 were obtained in the same manner as in the SiC-DPF described above except for setting the porosity of the inflow-side layer at 60%, setting the pore size of the inflow-side layer at 50 $\mu$m, setting the porosity of the outflow-side layer at 40%, setting the pore size of the outflow-side layer at 5 $\mu$m, loading (coating) the catalyst A as the gas purification catalyst, and loading (coating) the catalyst A as the PM removal catalyst. The catalyst amount ratio, the total catalyst amount, and the like are shown in Table 1.

(Comparative Examples 6 and 7)

Catalyst-carrying filters of Comparative Examples 6 and 7 were obtained in the same manner as in the SiC-DPF described above except for setting the porosity of the inflow-side layer at 60%, setting the pore size of the inflow-side layer at 50 $\mu$m, setting the porosity of the outflow-side layer at 40%, and setting the pore size of the outflow-side layer at 0.5 $\mu$m, or setting the porosity of the inflow-side layer at 60%, setting the pore size of the inflow-side layer at 50 $\mu$m, setting the porosity of the outflow-side layer at 40%, and setting the pore size of the outflow-side layer at 17 $\mu$m, loading (coating) the catalyst A as the gas purification catalyst, and loading (coating) the catalyst A as the PM removal catalyst. The catalyst amount ratio, the total catalyst amount, and the like are shown in Table 1.

(Comparative Examples 8 to 10)

A catalyst-carrying filter of Comparative Example 8 was obtained in the same manner as in the SiC-DPF described above except for setting the porosity of the inflow-side layer at 60%, setting the pore size of the inflow-side layer at 50 $\mu$m, setting the porosity of the outflow-side layer at 40%, setting the pore size of the outflow-side layer at 5 $\mu$m, loading (coating) the catalyst C-1 as the gas purification catalyst, and loading (coating) the catalyst B-1 as the PM removal catalyst. A catalyst-carrying filter of Comparative Example 9 was obtained in the same manner as described above except for loading (coating) the catalyst C-5 as the gas purification catalyst and loading the catalyst B-5 as the PM removal catalyst, and a catalyst-carrying filter of Comparative Example 10 was obtained in the same manner as described above, except for loading (coating) the catalyst E-3 as the gas purification catalyst and loading (coating) the catalyst D-3 as the PM removal catalyst. The catalyst amount ratio, the total catalyst amount, and the like are shown in Table 1.

(Comparative Examples 11 and 12)

A catalyst-carrying filter of Comparative Example 11 was obtained in the same manner as in the SiC-DPF described above except for setting the porosity of the inflow-side layer at 50%, setting the pore size of the inflow-side layer at 15 $\mu$m, and coating a gas purification catalyst (catalyst F) having an unburnt gas purification function and a NOx purification function on the honeycomb filter without forming the outflow-side layer (PM removal catalyst layer and PM trapping layer). A catalyst-carrying filter of Comparative Example 12 was obtained in the same manner as in the SiC-DPF described above except for setting the porosity of the inflow-side layer at 60%, setting the pore size of the inflow-side layer at 50 $\mu$m, setting the porosity of the outflow-side layer at 40%, setting the pore size of the outflow-side layer at 5 $\mu$m, and coating the catalyst F on the inflow-side layer (gas purification catalyst layer) and the outflow-side layer (PM removal catalyst layer and PM trapping layer).

The following experiments were conducted using the catalyst-carrying filters of Reference Examples 1 to 14 and Comparative Examples 1 to 12 thus obtained.

[1] Regeneration efficiency test

The catalyst-coated DPF was mounted on a diesel engine (2.0 liter) to deposit 8 g/l of PM was deposited on the DPF at 2000 rpm$\times$50 Nm. The exhaust gas temperature was increased by post injection, and the DPF inlet gas temperature was controlled at 650°C for 10 minutes. After stopping post injection, the DPF was removed. The amount of PM deposited on the DPF was then measured, and the regeneration efficiency (PM combustion efficiency) was calculated from the weight measured before and after the test.

[2] Pressure loss due to soot

The pressure loss across the DPF when 8 g/l of PM was deposited was measured, and the pressure loss when 6 g/l of PM was deposited was evaluated.

[3] Gas emission

The CO purification efficiency across the DPF was measured during regeneration (post injection).

[4] PM emission

The DPF was installed in a vehicle equipped with a diesel engine (2.0 liter), and an emission test was conducted in accordance with the European regulation mode.

The PM emission was measured to evaluate the trapping performance of the DPF.

[5] NOx purification efficiency

The DPF was installed in the vehicle used for the PM emission test, and an emission test was conducted in accordance with the European regulation mode. The NOx concentration contained in exhaust gas was measured before and after the exhaust gas passed through the DPF to determine the NOx purification efficiency of the DPF. The vehicle was run over 80,000 km in a state in which the DPF installed, and the above emission test was then conducted. The NOx concentration was measured before and after the exhaust gas passed through the DPF to determine the NOx purification efficiency of the DPF.

[6] Measuring method

The catalyst distributions of the catalyst-coated DPFs of the reference examples and comparative examples were observed using a scanning electron microscope (SEM). The chemical components were quantitatively analyzed by energy dispersive X-ray spectroscopy (EDX). The integrated value of the catalyst components at each measurement position was taken as the amount of catalyst supported at each measurement position. Specifically, the catalyst distribution was observed at an SEM magnification of 1000. The chemical components were observed by EDX. The chemical components were then analyzed by EDX. The catalyst components were then quantitatively analyzed by EDX. The specimens were sampled from the catalyst-coated DPFs of Reference Examples 1 to 14 and Comparative Examples 1 to 12 at about 30 mm from the inlet and the outlet (the upstream side and the downstream side in the DPF axial direction) and the center in the axial direction in midstream. The specimens were sampled at the center in the cross sections at three positions of upstream, downstream, and midstream. The amount of catalyst was measured at the center in the direction of the thickness of the inflow-side layer, on the upstream side (about 50 $\mu$m from the interface between the PM trapping layer and the outflow-side layer) in the direction of the thickness of the outflow-side layer, and about 50 $\mu$m from the interface between the intermediate layer and the outflow-side layer in midstream. The average value of the values measured at these three locations was taken as the amount of catalyst in each layer.
The experimental results are shown in Table 1.

TABLE 1

| No. | Inflow-side layer | | Outflow-side layer | | Gas purification catalyst | PM removal catalyst | Catalyst amount ratio (-) | Total catalyst amount (g/l) | Ceria amount ratio (-) |
|---|---|---|---|---|---|---|---|---|---|
| | Porosity (%) | Pore size (µm) | Porosity (%) | Pore size (µm) | | | | | |
| Comparative Example 1 | 60 | 50 | 40 | 5 | A | A | 1 | 45 | - |
| Comparative Example 2 | 60 | 50 | 40 | 5 | A | A | 1.01 | 45 | - |
| Reference Example 1 | 60 | 50 | 40 | 5 | A | A | 1.02 | 45 | - |
| Reference Example 2 | 60 | 50 | 40 | 5 | A | A | 2 | 45 | - |
| Reference Example 3 | 60 | 50 | 40 | 5 | A | A | 5 | 45 | - |
| Comparative Example 3 | 60 | 50 | 40 | 5 | A | A | 6 | 45 | - |
| Comparative Example 4 | 60 | 50 | 40 | 5 | A | A | 2 | 13 | - |
| Reference Example 4 | 60 | 50 | 40 | 5 | A | A | 2 | 15 | - |
| Reference Example 5 | 60 | 50 | 40 | 5 | A | A | 2 | 40 | - |
| Reference Example 6 | 60 | 50 | 40 | 5 | A | A | 2 | 170 | - |
| Comparative Example 5 | 60 | 50 | 40 | 5 | A | A | 2 | 200 | - |
| Comparative Example 6 | 60 | 50 | 40 | 0.5 | A | A | 2 | 45 | - |
| Reference Example 7 | 60 | 50 | 40 | 1 | A | A | 2 | 45 | - |
| Reference Example 8 | 60 | 50 | 40 | 15 | A | A | 2 | 45 | - |
| Comparative Example 7 | 60 | 50 | 40 | 17 | A | A | 2 | 45 | - |
| Comparative Example 8 | 60 | 50 | 40 | 5 | C-1 | B-1 | 1 | 45 | 1.1 |
| Reference Example 9 | 60 | 50 | 40 | 5 | C-2 | B-2 | 1 | 45 | 1.2 |
| Reference Example 10 | 60 | 50 | 40 | 5 | C-3 | B-3 | 1 | 45 | 5 |
| Reference Example 11 | 60 | 50 | 40 | 5 | C-4 | B-4 | 1 | 45 | 20 |
| Comparative Example 9 | 60 | 50 | 40 | 5 | C-5 | B-5 | 1 | 45 | 21 |
| Reference Example 12 | 60 | 50 | 40 | 5 | E-1 | D-1 | 1 | 45 | - |
| Reference Example 13 | 60 | 50 | 40 | 5 | E-2 | D-2 | 1 | 45 | - |
| Comparative Example 10 | 60 | 50 | 40 | 5 | E-3 | D-3 | 1 | 45 | - |
| Comparative Example 11 | 50 | 15 | - | - | F | F | - | 70 | - |
| Comparative Example 12 | 60 | 50 | 40 | 5 | F | F | - | 70 | - |
| Reference Example 14 | 60 | 50 | 40 | 5 | F | G | - | 70 | - |

Table 1 (continued)

| No. | Pt amount ratio (-) | Regeneration efficiency (-) | Pressure loss due to soot (kPa) | Gas emission (%) | PM emission (mg/km) | Initial NOx purification efficiency (%) | NOx purification efficiency after durability test (%) |
|---|---|---|---|---|---|---|---|
| Comparative Example 1 | - | 45 | 14 | 100 | 1.0 | - | - |
| Comparative Example 2 | - | 46 | 15 | 100 | 1.0 | - | - |
| Reference Example 1 | - | 54 | 14 | 100 | 1.0 | - | - |
| Reference Example 2 | - | 57 | 15 | 100 | 1.0 | - | - |
| Reference Example 3 | - | 63 | 18 | 100 | 1.0 | - | - |
| Comparative Example 3 | - | 66 | 19 | 93 | 1.0 | - | - |
| Comparative Example 4 | - | 41 | 11 | 91 | 1.0 | - | - |
| Reference Example 4 | - | 52 | 12 | 100 | 1.0 | - | - |
| Reference Example 5 | - | 61 | 13 | 100 | 1.0 | - | - |
| Reference Example 6 | - | 70 | 27 | 100 | 1.0 | - | - |
| Comparative Example 5 | - | 61 | 34 | 100 | 1.0 | - | - |
| Comparative Example 6 | - | 55 | 45 | 100 | 0.1 | - | - |
| Reference Example 7 | - | 54 | 13 | 100 | 0.3 | - | - |
| Reference Example 8 | - | 56 | 16 | 100 | 4.1 | - | - |
| Comparative Example 7 | - | 55 | 14 | 100 | 6.2 | - | - |
| Comparative Example 8 | - | 42 | 16 | 100 | 1.0 | - | - |
| Reference Example 9 | - | 54 | 15 | 100 | 1.0 | - | - |
| Reference Example 10 | - | 57 | 16 | 100 | 1.0 | - | - |
| Reference Example 11 | - | 65 | 15 | 100 | 1.0 | - | - |
| Comparative Example 9 | - | 71 | 14 | 97 | 1.0 | - | - |
| Reference Example 12 | 0 | 55 | 14 | 100 | 1.0 | - | - |
| Reference Example 13 | 0.2 | 55 | 15 | 100 | 1.0 | - | - |
| Comparative Example 10 | 1.5 | 54 | 14 | 100 | 1.0 | - | - |
| Comparative Example 11 | - | 35 | 22 | 100 | 1.0 | 85 | 35 |
| Comparative Example 12 | - | 54 | 21 | 100 | 1.0 | 85 | 49 |
| Reference Example 14 | - | 55 | 21 | 100 | 1.0 | 82 | 76 |

(Discussion 1)

The DPFs of Reference Examples 1 to 3 are compared with the DPFs of Comparative Examples 1 to 3. The DPF of Reference Example 1 having the two-layer structure showed an improved regeneration efficiency by changing the catalyst amount ratio from one (=identical catalyst density) to two. On the other hand, the regeneration efficiency decreased or the gas emission deteriorated to an impractical level in the comparative examples. When using the DPFs of Comparative Examples 1 and 2 in which the catalyst amount ratio was small (the amount of catalyst in the inflow-side layer was small), the regeneration efficiency deteriorated since the amount of catalyst used to burn soot was insufficient. Therefore, since the DPFs of Comparative Examples 1 and 2 must be regenerated at reduced intervals when subjected to repeated regeneration, the DPF must be regenerated at a high frequency during actual use. This means that the fuel consumption significantly increases (i.e., impractical). When using the DPF of Comparative Example 3 in which the catalyst amount ratio was too large (the amount of catalyst in the outflow-side layer was small), slippage of unburnt gas occurred during regeneration so that the gas emission deteriorated. On the other hand, since the DPFs of Reference Examples 1 to 3 had an appropriate catalyst amount ratio, the amount of catalyst used to burn soot was sufficient so that the regeneration efficiency was improved. The DPFs of Reference Examples 1 to 3 also achieved good gas emission results.

The term "catalyst amount ratio" used herein refers to the catalyst density ratio (hereinafter the same).

(Discussion 2)

The DPFs of Reference Examples 4 to 6 are compared with the DPFs of Comparative Examples 4 and 5. In Comparative Example 4, in which the total catalyst amount was small, as in the Discussion 1, since the amount of catalyst in the inflow-side layer was insufficient, the regeneration efficiency decreased. Moreover, since the amount of catalyst in the outflow-side layer was insufficient, the gas emission deteriorated. In Comparative Example 5, in which the total catalyst amount was too large, the pores were clogged by the catalyst so that the pressure loss due to soot increased to a large extent. Moreover, since soot entered the pores to only a small extent, soot did not sufficiently come in contact with the catalyst so that the regeneration efficiency decreased. In other words, since the regeneration efficiency did not increase to a level of more than 50% even if the amount of catalyst was increased, the performance decreases in spite of an increase in costs (i.e., impractical). On the other hand, since the DPFs of Reference Examples 4 to 6 had an appropriate total catalyst amount, the regeneration efficiency was improved. Moreover, the performance can be increased while suppressing the production cost.

(Discussion 3)

The DPFs of Reference Examples 7 and 8 are compared with the DPFs of Comparative Examples 6 and 7. In Comparative Example 6, since the pore size of the outflow-side layer was too small, the pressure loss increased to a large extent due to low permeability. In Comparative Example 7, since the pore size of the outflow-side layer was too large, the trapping efficiency decreased so that the PM emission deteriorated. Therefore, the DPFs of Comparative Examples 6 and 7 are impractical. On the other hand, since the DPFs of Reference Examples 7 and 8 were formed so that the outflow-side layer had an appropriate pore size, a good PM emission was achieved without showing an increase in pressure loss.

(Discussion 4)

The DPFs of Reference Examples 9 to 11 are compared with the DPFs of Comparative Examples 8 and 9. In Reference Examples 9 to 11, since the ceria amount ratio was increased, the regeneration efficiency could be increased even if the catalyst amount ratio was one. In Comparative Example 8, since the catalyst amount ratio was smaller than 1.2, the regeneration efficiency was insufficient. In Comparative Example 9, since the catalyst amount ratio was larger than 20, the amount of ceria in the outflow-side layer was too small. As a result, the gas emission deteriorated.

(Discussion 5)

The DPFs of Reference Examples 12 and 13 are compared with the DPF of Comparative Example 10. In Comparative Example 10, the regeneration efficiency did not change even if the amount of Pt in the inflow-side layer was increased. The regeneration efficiency did not change even when the amount of Pt was zero (Reference Example 12) or the Pt amount ratio was 0.2 (Reference Example 13). This means that Pt does not contribute to soot combustion. As compared with Examples 12 and 13, the DPF of Comparative Example 10 increases costs due to the addition of Pt even though the regeneration efficiency is not improved.

(Discussion 6)

The DPF of Reference Example 14 is compared with the DPFs of Comparative Examples 11 and 12. In Comparative Example 11, since the pore size was small, soot was deposited in the pores in the partition walls to only a small extent. Since soot formed a cake layer on the upstream side of the partition walls, the regeneration efficiency decreased since soot did not sufficiently come in contact with the catalyst. Since the NOx removal function of the catalyst applied to the outflow-side layer of the partition walls decreased due to combustion heat generated during regeneration of soot deposited on the partition walls, the NOx purification efficiency after the durability test decreased. In Comparative Example 12, since the gas purification catalyst was applied to the PM trapping layer in the outflow-side layer (the unburnt gas purification function was provided to the PM trapping layer) in addition to the gas purification catalyst applied to the inflow-side layer, the NOx purification function of the unburnt gas purification catalyst applied to the PM trapping layer decreased due to combustion heat generated during regeneration of soot deposited on the PM trapping layer. As a result, the NOx purification efficiency after the durability test decreased. In Reference Example 14, since the unburnt gas purification catalyst was applied to only the inflow-side layer and the PM removal catalyst was applied to the PM trapping layer, the NOx removal function of the unburnt gas purification catalyst applied to the inflow-side layer was not affected (did not decrease to a large extent) by heat generated during regeneration of soot deposited on the PM trapping layer. Therefore, the NOx purification efficiency after the durability test decreased to only a small extent.

The catalyst-carrying filter according to the present invention may be suitably used to trap or purify particulate matter contained in exhaust gas discharged from an internal combustion engine (e.g., diesel engine, ordinary vehicle engine, and large-size vehicle (e.g., truck and bus) engine) or a combustion apparatus.

## Claims

1. A catalyst-carrying filter comprising a honeycomb-structured base material having a plurality of cells (3) that serve as exhaust gas passages and are partitioned by partition walls (4) formed of a porous ceramic having a number of pores, the partition walls (4) including a gas-inflow-side layer (13) and a gas-outflow-side layer (15), one open end (7a) and the other open end (7b) of the plurality of cells being alternately plugged by plugging portions (8);
the inflow-side layer (13) of the partition wall including a gas purification catalyst layer (11) that supports or is coated with a gas purification catalyst that promotes oxidation of gas; and
the outflow-side layer (15) of the partition wall including a PM trapping layer (9) that has a average pore size of 1 to 15 $\mu$m so as to trap particulate matter, and has an oxidizing catalyst loaded thereon to form a PM removal catalyst layer (10) for promoting oxidation of particulate matter contained in exhaust gas,
wherein the amount (g/l) of oxidizing catalyst supported in the PM removal catalyst layer (10) is larger than that of the gas purification catalyst layer (11) by a factor of 1.02 to 5, and
the total amount of oxidizing catalyst supported in the PM removal catalyst layer (10) and the gas purification catalyst layer (11) is 15 to 180 g/l, and
the amount of noble metal contained in the PM removal catalyst layer (10) is smaller than that of the gas purification catalyst layer (11).

2. The catalyst-carrying filter according to claim 1, wherein the PM removal catalyst layer (10) does not contain a noble metal.

3. The catalyst-carrying filter according to claim 1 or 2, wherein the amount of Ce contained in the PM removal catalyst layer (10) is larger than that of the gas purification catalyst layer (11) by a factor of 1.2 to 10.

4. The catalyst-carrying filter according to any one of claims 1 to 3, wherein the gas purification catalyst (11) includes a NOx removal catalyst.

5. The catalyst-carrying filter according to any one of claims 1 to 4, wherein the PM removal catalyst layer (10) has an average pore size smaller than that of the gas purification catalyst layer (11).

6. The catalyst-carrying filter according to any one of claims 1 to 5, wherein the PM removal catalyst layer (10) has an average pore size of 1 to 15 $\mu$m.

7. The catalyst-carrying filter according to any one of claims 1 to 6, wherein the gas purification catalyst layer (11) has an average pore size of 35 to 80 $\mu$m.

8. A method of producing the catalyst-carrying filter according to any one of claims 1 to 7, the method comprising either (i) or (ii):

(i) separately coating the PM removal catalyst and the gas purification catalyst; or
(ii) coating the gas purification catalyst from an inlet side and coating the PM removal catalyst from an outlet side.

**Patentansprüche**

1. Katalysatortragender Filter, umfassend ein Wabenstruktur-Grundmaterial mit einer Vielzahl von Zellen (3), die als Abgasdurchlässe dienen und durch Trennwände (4), gebildet aus einer porösen Keramik mit einer Vielzahl an Poren, geteilt sind, wobei die Trennwände (4) eine Gaseinström-Seitenschicht (13) und eine Gasausström-Seitenschicht (15) umfassen,
wobei ein offenes Ende (7a) und das andere offene Ende (7b) der Vielzahl an Zellen wechselweise durch Verschlussabschnitte (8) verschlossen werden;
wobei die Einström-Seitenschicht (13) der Trennwand eine Gasreinigungskatalysatorschicht (11) umfasst, die einen Gasreinigungskatalysator, der die Oxidation von Gas fördert, trägt oder damit beschichtet ist; und
wobei die Ausström-Seitenschicht (15) der Trennwand eine Feinstaub-Fangschicht (9) umfasst, die eine mittlere Porengröße von 1 bis 15 $\mu$m aufweist, um Feinstaub zu fangen, sowie einen Oxidationskatalysator darauf befestigt hat, um eine Feinstaub-Entfernungskatalysatorschicht (10) zu bilden, um die Oxidation von Feinstaub, der in Abgas umfasst ist, zu fördern,
wobei die Menge (g/l) an Oxidationskatalysator, der in der Feinstaub-Entfernungskatalysatorschicht (10) getragen wird, um Faktor 1,02 bis 5 größer ist als jene der Gasreinigungskatalysatorschicht (11), und
die Gesamtmenge an Oxidationskatalysator, die in der Feinstaub-Entfernungskatalysatorschicht (10) und der Gasreinigungskatalysatorschicht (11) getragen wird, 15 bis 180 g/l beträgt, und
die Menge an Edelmetall, die in der Feinstaub-Entfernungskatalysatorschicht (10) enthalten ist, kleiner ist als jene der Gasreinigungskatalysatorschicht (11).

2. Katalysatortragender Filter nach Anspruch 1, wobei die Feinstaub-Entfernungskatalysatorschicht (10) kein Edelmetall enthält.

3. Katalysatortragender Filter nach Anspruch 1 oder 2, wobei die Menge an Ce, die in der Feinstaub-Entfernungskatalysatorschicht (10) enthalten ist, um Faktor 1,2 bis 10 größer ist als jene der Gasreinigungskatalysatorschicht (11).

4. Katalysatortragender Filter nach einem der Ansprüche 1 bis 3, wobei der Gasreinigungskatalysator (11) einen NOx-Entfernungskatalysator umfasst.

5. Katalysatortragender Filter nach einem der Ansprüche 1 bis 4, wobei die Feinstaub-Entfernungskatalysatorschicht (10) eine mittlere Porengröße aufweist, die kleiner ist als jene der Gasreinigungskatalysatorschicht (11).

6. Katalysatortragender Filter nach einem der Ansprüche 1 bis 5, wobei die Feinstaub-Entfernungskatalysatorschicht (10) eine mittlere Porengröße von 1 bis 15 $\mu$m aufweist.

7. Katalysatortragender Filter nach einem der Ansprüche 1 bis 6, wobei die Gasreinigungskatalysatorschicht (11) eine mittlere Porengröße von 35 bis 80 $\mu$m aufweist.

8. Verfahren zur Herstellung eines katalysatortragenden Filters nach einem der Ansprüche 1 bis 7, wobei das Verfahren entweder (i) oder (ii) umfasst:

(i) separates Beschichten des Feinstaub-Entfernungskatalysators und des Gasreinigungskatalysators; oder
(ii) Beschichten des Gasreinigungskatalysators von einer Einströmseite und Beschichten des Feinstaub-Entfernungskatalysators von einer Ausströmseite.

**Revendications**

1. Filtre portant un catalyseur comprenant un matériau de base à structure en nid d'abeille ayant une pluralité de cellules (3) qui servent de passages de gaz d'échappement et sont cloisonnées par des cloisons (4) formées d'une céramique poreuse ayant un certain nombre de pores, les cloisons (4) incluant une couche côté entrée de gaz (13) et une couche côté sortie de gaz (15),

une extrémité ouverte (7a) et l'autre extrémité ouverte (7b) de la pluralité de cellules étant colmatées en alternance par des parties de colmatage (8) ;

la couche côté entrée (13) de la cloison incluant une couche de catalyseur de purification de gaz (11) qui supporte ou est revêtue avec un catalyseur de purification de gaz qui favorise l'oxydation du gaz ; et

la couche côté sortie (15) de la cloison incluant une couche de piégeage de MP (9) qui a une taille de pore moyenne de 1 à 15 $\mu$m de sorte à piéger la matière particulaire, et a un catalyseur d'oxydation chargé sur celle-ci pour former une couche de catalyseur d'élimination de MP (10) pour favoriser l'oxydation de la matière particulaire contenue dans le gaz d'échappement,

dans lequel la quantité (g/l) de catalyseur d'oxydation supportée dans la couche de catalyseur d'élimination de MP (10) est plus grande que celle de la couche de catalyseur de purification de gaz (11) d'un facteur de 1,02 à 5, et la quantité totale de catalyseur d'oxydation supportée dans la couche de catalyseur d'élimination de MP (10) et la couche de catalyseur de purification de gaz (11) est de 15 à 180 g/1, et

la quantité de métal noble contenue dans la couche de catalyseur d'élimination de MP (10) est plus petite que celle de la couche de catalyseur de purification de gaz (11) .

2. Filtre portant un catalyseur selon la revendication 1, dans lequel la couche de catalyseur d'élimination de MP (10) ne contient pas de métal noble.

3. Filtre portant un catalyseur selon la revendication 1 ou 2, dans lequel la quantité de Ce contenue dans la couche de catalyseur d'élimination de MP (10) est plus grande que celle de la couche de catalyseur de purification de gaz (11) d'un facteur de 1,2 à 10.

4. Filtre portant un catalyseur selon l'une quelconque des revendications 1 à 3, dans lequel le catalyseur de purification de gaz (11) inclut un catalyseur d'élimination de NOx.

5. Filtre portant un catalyseur selon l'une quelconque des revendications 1 à 4, dans lequel la couche de catalyseur d'élimination de MP (10) a une taille de pore moyenne plus petite que celle de la couche de catalyseur de purification de gaz (11).

6. Filtre portant un catalyseur selon l'une quelconque des revendications 1 à 5, dans lequel la couche de catalyseur d'élimination de MP (10) a une taille de pore moyenne de 1 à 15 $\mu$m.

7. Filtre portant un catalyseur selon l'une quelconque des revendications 1 à 6, dans lequel la couche de catalyseur de purification de gaz (11) a une taille de pore moyenne de 35 à 80 $\mu$m.

8. Procédé de production du filtre portant un catalyseur selon l'une quelconque des revendications 1 à 7, le procédé comprenant soit (i), soit (ii) ;

(i) le revêtement séparé du catalyseur d'élimination de MP et du catalyseur de purification de gaz ; ou
(ii) le revêtement du catalyseur de purification de gaz depuis un côté entrée et le revêtement du catalyseur d'élimination de MP depuis un côté sortie.

FIG.1

FIG.2

FIG.3

EP 2 105 199 B1

FIG.4

$G_1$

4

13(11)

15(9(10))

FIG.5

(PORE SIZE:LARGE)　　　　　(PORE SIZE:LARGE)

G1　　　　　　　　　　　　　　G1

4a　　　11　　11　　　　　　　11

4

10　　　10　　　4b　　　　G2　　　10　　　　G2

(PORE SIZE:SMALL)　　　　　(PORE SIZE:SMALL)

EP 2 105 199 B1

FIG.6

FIG.7

CUT

FIG.8

EP 2 105 199 B1

FIG.9

**REFERENCES CITED IN THE DESCRIPTION**

**Patent documents cited in the description**

- JP 2002309921 A
- JP 2002519186 T
- JP 2007130637 A
- US 2004191133 A